# EUROPEAN PATENT APPLICATION

(11) **EP 4 624 531 A1**
(43) Date of publication of application: **01.10.2025**
(21) Application number: 23894151.2
(22) Date of filing: 16.05.2023
(51) Int. Cl.: C08L 95/00, C08K 3/34, C08K 5/09, C08L 9/00, C08L 91/00, E01C 7/26

(54) **ASPHALT COMPOSITION FOR REPAIRING ASPHALT PAVEMENT**

(30) Priority: 22.11.2022 JP 2022186863
(71) Applicant: Maeda Road Construction Co., Ltd, Tokyo 141-8665 (JP)
(72) Inventor: TANIGUCHI, Hiroshi, Tokyo 141-8665 (JP); HATAKEYAMA, Keigo, Tokyo 141-8665 (JP); ODA, Takeru, Tokyo 141-8665 (JP)
(74) Representative: Kraus & Lederer PartGmbB
(86) International application number: PCT/JP2023/018328
(87) International publication number: WO 2024/111135

(57) **Abstract**

Provided is an asphalt composition for repairing asphalt pavement, the asphalt composition comprising an asphalt and a lubricative solidification material, wherein the lubricative solidification material contains a tall oil fatty acid and/or a tall oil fatty acid ester, and a C6-C30 branched saturated fatty acid.

## Description

### TECHNICAL FIELD

The present invention relates to an asphalt composition used for repairing asphalt pavement.

### BACKGROUND ART

Hot asphalt mixtures are usually used at an initial compaction temperature within the range of 110 to 140°C as described in Paving Handbook ("Hosou Sekou Binran" in Japanese), for example. However, although the hot asphalt mixtures can achieve high strength immediately after paving, the mixtures can be used only before the temperature of the mixtures decreases. Therefore, such a hot asphalt mixture can be difficult to use, for example, when a small amount of the mixture are used in portions, when the mixture is transported for a long period of time, and when a method such as a thin layer overlay method is used in which the mixture is spread into a thin paving layer so that the temperature of the mixture significantly decreases immediately after spreading.

Accordingly, hot asphalt mixtures prepared using a warm-mix technique and ambient temperature paving-type asphalt mixtures have been examined. The hot asphalt mixtures prepared using a warm-mix technique, i.e., warm-mix asphalt mixtures, are generally considered to allow the lower limit of the usable temperature range of the hot asphalt mixtures to be lowered by about 30°C. The ambient temperature paving-type asphalt mixtures are considered to allow for paving at ambient temperature (100°C or lower).

As an asphalt mixture that allows for paving at ambient temperature or in a mid-temperature range, for example, a so-called cutback asphalt mixture in which the viscosity of the asphalt mixture is intentionally reduced using a mineral oil or the like is proposed. In the cutback asphalt mixture, as disclosed in Patent Document 1, the asphalt is softened using a cutback material such as a mineral oil, and the asphalt mixture hardens as the cutback material volatilizes. However, drawbacks of the method in which the asphalt is cut back using a mineral oil or the like to intentionally reduce the viscosity at the time of paving as described above are a considerable reduction in initial strength of a newly opened road and a long curing time.

Alternatively, an ambient temperature paving-type asphalt mixture using an asphalt emulsion is also proposed. The mixture is not required to be heated and dried, but unfortunately the application of the mixture can be limited because the mixture causes relatively low strength and the decomposition rate of the asphalt emulsion should be taken into consideration. In addition, in the ambient-temperature asphalt mixture using an asphalt emulsion, the asphalt emulsion may flow out if it rains before the emulsion decomposes after paving.

In contrast, Patent Document 2 discloses an ambient temperature paving-type asphalt mixture that allows for paving at ambient temperature, in which a tall oil fatty acid is used as a cutback material, and the tall oil fatty acid reduces the viscosity of the asphalt mixture, which allows for paving at ambient temperature. According to this technique disclosed in Patent Document 2, the tall oil fatty acid as a cutback material reacts with the cement after paving to act as a curing agent, which leads to sufficient strength.

On the other hand, in the asphalt mixtures that allow for paving at ambient temperature or in a mid-temperature range, it has also been required to provide a paved body having improved characteristics, such as further improved durability, flexibility, and strength of adhesion to a floor slab after paving. Therefore, an asphalt mixture which can improve these characteristics and allow for paving at ambient temperature or in a mid-temperature range has been desired.

In addition, when these asphalt mixtures are used for paving, the mixtures are typically transported with heating and mixing by a truck equipped with a heating and mixing apparatus (cooker) to ensure fluidity that enables pouring. However, when pavement is to be repaired at a small scale, the amount of an asphalt mixture used is too small relative to the maximum load of the truck, which results in a large amount of waste materials or an increase in cost of repairs.

### RELATED ART DOCUMENTS

### PATENT DOCUMENTS

Patent Document 1: JP H11-12475 A
Patent Document 2: JP 5583978 B

### SUMMARY OF THE INVENTION

### PROBLEMS TO BE SOLVED BY THE INVENTION

The present invention has been proposed in consideration of such circumstances. An object of the present invention is to provide an asphalt composition that can provide a paved body that can be used for paving at ambient temperature and has excellent flexibility and adhesion to a floor slab, and can be suitably used for repairing asphalt pavement, in particular.

### MEANS FOR SOLVING PROBLEMS

The present inventor, who has conducted extensive research to solve the above problems, has found that the above problems can be solved by an asphalt composition comprising an asphalt and a lubricative solidification material, and containing a tall oil fatty acid and/or a tall oil fatty acid ester and a C6-C30 branched saturated fatty acid as the lubricative solidification material, and thus has completed the present invention.

Specifically, according to Mode 1 of the present invention, provided is an asphalt composition for repairing asphalt pavement, the asphalt composition comprising asphalt and a lubricative solidification material, wherein the lubricative solidification material contains a tall oil fatty acid and/or a tall oil fatty acid ester, and a C6-C30 branched saturated fatty acid.

According to Mode 2 of the present invention, provided is the asphalt composition according to Mode 1, wherein the weight ratio of the content of the tall oil fatty acid and/or the tall oil fatty acid ester to the content of the C6-C30 branched saturated fatty acid, i.e., "tall oil fatty acid and/or tall oil fatty acid ester:C6-C30 branched saturated fatty acid" in the lubricative solidification material is 5:95 to 95:5.

According to Mode 3 of the present invention, provided is the asphalt composition according to Mode 1 or 2, wherein the asphalt is a modified asphalt.

According to Mode 4 of the present invention, provided is the asphalt composition according to Mode 3, wherein the modified asphalt contains a straight asphalt and a modifier, and the content of the modifier in the modified asphalt is 1 to 30% by weight.

According to Mode 5 of the present invention, provided is the asphalt composition according to any one of Modes 1 to 4, further comprising an alkaline additive.

According to Mode 6 of the present invention, provided is the asphalt composition according to any one of Modes 1 to 5, wherein the asphalt composition is used such that the asphalt composition is poured into a place to be repaired where an aggregate is spread.

### EFFECTS OF INVENTION

According to the present invention, by using a lubricative solidification material containing a tall oil fatty acid and/or a tall oil fatty acid ester and a C6-C30 branched saturated fatty acid, paving at ambient temperature is allowed and a paved body having excellent flexibility and adhesion to a floor slab can be obtained. In particular, the asphalt composition according to the present invention does not contain an aggregate contained in a typical asphalt mixture, and is easy to transport and use in paving in a small amount, and thus can be suitably used for repairing asphalt pavement at a small scale.

### DESCRIPTION OF EMBODIMENTS

The asphalt composition according to the present invention comprises an asphalt and a lubricative solidification material, wherein the lubricative solidification material contains a tall oil fatty acid and/or a tall oil fatty acid ester and a C6-C30 branched saturated fatty acid. When an alkaline additive and a hardening accelerator are added to the asphalt composition according to the present invention at the time of paving, the lubricative solidification material experiences a saponification reaction or a neutralization reaction with an alkaline component derived from the alkaline additive to cause an increase in strength. Examples of the alkaline additive include ordinary Portland cement, and examples of the hardening accelerator include water.

Here, the saponification reaction or the neutralization reaction in the present invention can be any reaction to generate a fatty acid alkali salt. Examples thereof include a saponification method of adding alkaline water to a fatty acid ester to generate a fatty acid alkali salt (soap) and glycerol, a neutralization method of neutralizing a fatty acid with alkaline water, and the like. When the alkaline additive is added in the form of a solid in the saponification reaction, usually, the reaction does not start unless a solvent such as water is present. On the other hand, when a solvent such as water is present, the solvent causes a reaction (saponification reaction or neutralization reaction) of "fatty acid in lubricative solidification material + alkaline additive + water = soap (solid)" to generate a soap, which then causes the development of strength.

A straight asphalt, a modified asphalt, and the like can be used as the asphalt. From the viewpoint of improving the flexibility of the paved body to be obtained by using an asphalt composition, a modified asphalt formed by adding a modifier to a straight asphalt is preferably used. As the modifier, those containing a thermoplastic elastomer and a mineral oil are preferably used. Examples of the thermoplastic elastomer contained in the modifier include styrene thermoplastic elastomers such as styrene-butadiene elastomers (SBS), styrene-butadiene-butylene elastomers (SBBS), styrene-isoprene elastomers (SIS), and styrene-ethylene-butylene elastomers (SEBS). The content of the thermoplastic elastomer in the modifier is preferably 10 to 50% by weight, more preferably 15 to 40% by weight. The content of the mineral oil in the modifier is preferably 50 to 90% by weight, more preferably 60 to 85% by weight. Besides the thermoplastic elastomer described above, the modifier may optionally contain a thermoplastic resin, other additives, and the like. The content of the modifier in the modified asphalt is preferably 1 to 40% by weight, more preferably 10 to 25% by weight. When the content of the modifier falls within the above ranges, the flexibility of the paved body to be obtained by using the asphalt composition can be further improved.

The content of the asphalt in the asphalt composition according to the present invention is preferably 1 to 70% by weight, more preferably 10 to 60% by weight, still more preferably 20 to 40% by weight.

As the lubricative solidification material, a lubricative solidification material containing a tall oil fatty acid and/or a tall oil fatty acid ester and a C6-C30 branched saturated fatty acid is used. According to the present invention, when the lubricative solidification material containing a tall oil fatty acid and a C6-C30 branched saturated fatty acid is used, the lubricative solidification material acts as a cutback material that reduces the viscosity of the asphalt composition at ambient temperature or in a mid-temperature range before paving. This allows the asphalt composition to have excellent handling properties, and allows for paving at ambient temperature or in a mid-temperature range. Moreover, a paved body to be obtained by solidifying a mixture of the asphalt composition and an aggregate or the like can achieve an excellent balance between the flexibility and the adhesion to a floor slab.

The weight ratio of the content of a tall oil fatty acid and/or a tall oil fatty acid ester to the content of a C6-C30 branched saturated fatty acid, i.e., "tall oil fatty acid and/or tall oil fatty acid ester:C6-C30 branched saturated fatty acid" in the lubricative solidification material is preferably 5:95 to 95:5, more preferably 10:90 to 90:10, still more preferably 30:70 to 90:10, particularly preferably 50:50 to 90:10. When the ratio of the content of a tall oil fatty acid and/or a tall oil fatty acid ester to the content of a C6-C30 branched saturated fatty acid falls within the above ranges, a paved body to be obtained by solidifying a mixture of the asphalt composition according to the present invention and an aggregate or the like can achieve a more excellent balance between the flexibility and the adhesion to a floor slab.

The ratio of the content of a tall oil fatty acid and/or a tall oil fatty acid ester to the content of a C6-C30 branched saturated fatty acid in the lubricative solidification material is preferably adjusted according to the range of the particle size of the aggregate used in paving. For example, when #5 crushed stone having a particle size of 20 to 13 mm is used as the aggregate, the weight ratio of the content of a tall oil fatty acid and/or a tall oil fatty acid ester to the content of a C6-C30 branched saturated fatty acid is preferably 40:60 to 80:20, more preferably 50:50 to 70:30. When #6 crushed stone having a particle size of 13 to 5 mm is used as the aggregate, the weight ratio of the content of a tall oil fatty acid and/or a tall oil fatty acid ester to the content of a C6-C30 branched saturated fatty acid is preferably 50:50 to 90:10, more preferably 60:40 to 80:20.

The tall oil fatty acid contains fatty acids. Examples of the fatty acids constituting the tall oil fatty acid include palmitic acid, stearic acid, oleic acid, linoleic acid (including conjugated linoleic acid), and the like. The proportions of the components in the fatty acids constituting the tall oil fatty acid are not particularly limited, but the following proportions are preferred.
palmitic acid: preferably 0.5 to 10% by weight, more preferably 1 to 6% by weight
stearic acid: preferably 0.5 to 8% by weight, more preferably 1 to 4% by weight
oleic acid: preferably 15 to 65% by weight, more preferably 30 to 50% by weight
linoleic acid (including conjugated linoleic acid): preferably 15 to 70% by weight, more preferably 30 to 45% by weight

The tall oil fatty acid is derived from natural products, and thus may contain a resin acid in addition to the above-mentioned fatty acids. Examples of the resin acid contained in the tall oil fatty acid include rosin containing any one or more of abietic acid, dehydroabietic acid, neoabietic acid, pimaric acid, isopimaric acid, and palustric acid; and the like.

The branched saturated fatty acid used as the lubricative solidification material can be any C6-C30 branched saturated fatty acid. Preferred are C6-C24 branched saturated fatty acids, and more preferred are C6-C20 branched saturated fatty acids. From the viewpoint of further enhancing the flexibility, still more preferred are C6-C12 branched saturated fatty acids, and particularly preferred are C6-C10 branched saturated fatty acids. Alternatively, from the viewpoint of achieving an excellent balance between the handling properties and the flexibility, C16-C20 branched saturated fatty acids are particularly preferred. The branched saturated fatty acid used as the lubricative solidification material preferably has a melting point of 40°C or lower, more preferably 25°C or lower (liquid at ambient temperature) from the viewpoint of further enhancing the handling properties.

In the present invention, it is sufficient that the C6-C30 branched saturated fatty acid is a C6-C30 saturated fatty acid having a structure including a side chain structure or branched structure containing at least an alkyl group. The C6-C30 branched saturated fatty acid may be derived from natural products or may be a product obtained by synthesis. When a plurality of structural isomers are present, the C6-C30 branched saturated fatty acid may contain such a plurality of structural isomers. Specific examples of the C6-C30 branched saturated fatty acid include isoheptanoic acid, octylic acid, isononanoic acid, isodecylic acid, isotridecylic acid, isopalmitic acid, isostearic acid, isomyristic acid, and the like. Among these, preferred are octylic acid and isostearic acid, and more preferred is isostearic acid from the viewpoint of enhancing crack resistance.

The weight ratio of the content of the asphalt to the content of the lubricative solidification material, i.e., "asphalt:lubricative solidification material" in the asphalt composition according to the present invention is preferably in the range of 10:90 to 90:10, more preferably 15:85 to 65:35, still more preferably 20:80 to 40:60. As the amount of the lubricative solidification material to be added increases, the usable temperature range also becomes broader. Thus, the amount of the lubricative solidification material to be added is preferably determined according to the paving conditions.

The lubricative solidification material used in the present invention can have any acid value, and the acid value is preferably 130 to 380 mg KOH/g, more preferably 150 to 320 mg KOH/g, still more preferably 160 to 280 mg KOH/g.

The asphalt composition according to the present invention can contain other additives usually used in the field of asphalt pavement, in addition to the above materials, provided that the action and advantageous effects of the present invention are not impaired. Examples of such additives include, but should not be limited to, fillers, plant fibers, pigments, antifreezing agents, and the like.

The asphalt composition according to the present invention can be produced by the following method. First, an asphalt and a modifier are added into a mixing apparatus, and mixed to prepare a modified asphalt. The mixing temperature is usually 120 to 185°C, preferably 140 to 180°C, and the mixing time is usually about 160 to 175. Next, a lubricative solidification material is added into the mixing apparatus, and the modified asphalt and the lubricative solidification material are mixed. The lubricative solidification material may be used at ambient temperature. However, during a cold season, for example, it is preferred that the lubricative solidification material be used after heating to about 15 to 25°C. The mixing temperature is usually 50 to 160°C, preferably 60 to 140°C, and the mixing time is usually about 10 seconds to 5 minutes. Accordingly, the asphalt composition according to the present invention can be obtained.

The asphalt composition according to the present invention can usually be stored for a long period of time (e.g., about 12 months) after it is poured into a pail or the like and hermetically sealed.

The asphalt composition according to the present invention allows for paving at ambient temperature, and is easy to transport and use in paving in a small amount, and thus can be suitably used for repairing asphalt pavement at a small scale, in particular.

The method for paving asphalt pavement using the asphalt composition according to the present invention is as follows. First, an aggregate is spread over a floor slab to be repaired, and the height of the aggregate is adjusted using a trowel or the like. Next, the asphalt composition according to the present invention in a pail or the like is stirred using a hand mixer. Then, an alkaline additive is added, and the resulting mixture is stirred. Water as a hardening accelerator is added, and the mixture is further stirred to give a mixture for pavement. Next, the resulting mixture for pavement is poured (or filled) into the place to be repaired where the aggregate is spread, and is leveled using a trowel or the like. Finally, the mixture is cured for 30 to 120 minutes to complete the paving.

As the aggregate, those usually used in the asphalt for pavement can be appropriately used. A preferred aggregate used is a single-sized crushed stone, and more preferred is a single-sized crushed stone in which the mass percentage of the single-sized crushed stone passing through a 4.75-mm sieve, which is a ratio of particles passing through a sieve having an opening of 4.75 mm, is 3% or less. For example, #5 crushed stone having a particle size of 20 to 13 mm or #6 crushed stone having a particle size of 13 to 5 mm can be suitably used.

The amount of the asphalt composition used for paving is preferably 5 to 45 parts by weight, more preferably 15 to 35 parts by weight relative to 100 parts by weight of the aggregate. The mixture, which is formed by adding an alkaline additive and a hardening accelerator to the asphalt composition, is used in an amount of preferably 10 to 50 parts by weight, more preferably 20 to 40 parts by weight relative to 100 parts by weight of the aggregate.

The alkaline additive can be any compound as long as it provides an alkali component as a result of the action of a hardening accelerator (such as water). To neutralize the branched saturated fatty acid, desired are those providing a low hydrogen ion concentration (that is, a high pH) as a result of the action of the hardening accelerator. Although sodium hydroxide or potassium hydroxide usually used in soapmaking can also be used, among cements generally used as civil engineering materials, ordinary cement (ordinary Portland cement) which provides a low hydrogen ion concentration as a result of the action of the hardening accelerator is preferably used from the environmental viewpoint. The ordinary Portland cement used can be those which contain tricalcium silicate (3CaO·SiO₂), dicalcium silicate (2CaO·SiO₂), calcium aluminate (3CaO·Al₂O₃), calcium aluminoferrite (4CaO·Al₂O₃·Fe₂O₃), calcium sulfate (CaSO₄·2H₂O), or the like as the main component, for example. Besides these, an aqueous solution containing metal ions such as sodium ions (Na+), potassium ions (K+), magnesium ions (Mg²⁺), or calcium ions (Ca²⁺); a powder containing a metal salt which decomposes by addition of water to generate the above ions; and sodium hydrogen carbonate (NaHCO₃), potassium hydrogen carbonate (KHCO₃), or the like can be used as the alkaline additive. The alkaline additive is used in an amount such that the weight ratio "asphalt composition:alkaline additive" is within the range of preferably 100:5 to 100:150, more preferably 100:15 to 100:40.

As described above, paving using the asphalt composition according to the present invention can be performed.

### EXAMPLES

Hereinafter, the present invention will be described in more detail with reference to Examples, but the present invention is not limited to these Examples.

### <Example 1>

1.5 Parts by weight of a modifier (trade name "ASTAS", available from Nissin-Kasei Co., Ltd., containing about 20% by weight of a styrene-butadiene thermoplastic elastomer and about 60% by weight of mineral oil) was mixed with 5.8 parts by weight of a straight asphalt using a stirring machine or a mixer (stirrer), giving a modified asphalt (straight asphalt:modifier = 80:20 (weight ratio)). To this modified asphalt, 12.7 parts by weight of a tall oil fatty acid (trade name "HARTALL FA-1", available from Harima Chemicals Group, Inc.) and 4.3 parts by weight of isostearic acid (trade name "Isostearic Acid R", available from MIYOSHI OIL & FAT CO., LTD.) were added (tall oil fatty acid:isostearic acid = 75:25 (weight ratio)), giving an asphalt composition. In this time, the heating temperature of the asphalt was 160 to 175°C, and the heating temperatures of others were ambient temperature.

The tall oil fatty acid (trade name "HARTALL FA-1", available from Harima Chemicals Group, Inc.) used in Example 1 as a lubricative solidification material has the following properties.
· "unsaturated fatty acid:resin acid" = 98.5:1.5 (weight ratio)
· content of unsaponifiable matter: 2.0% by weight
· ratio of unsaturated fatty acid components: palmitic acid: 1 to 3% by weight, stearic acid: 1 to 3% by weight, oleic acid: 40 to 50% by weight, linoleic acid: 35 to 45% by weight
· type of resin acid: rosin
· acid value: 194 mg KOH/g
· melting point: 25°C or lower (liquid at ambient temperature)

The isostearic acid (trade name "Isostearic Acid R", available from MIYOSHI OIL & FAT CO., LTD.) used in Example 1 as a lubricative solidification material has the following properties.
· acid value: 191.1 mg KOH/g
· iodine number: 4.7
· melting point: 25°C or lower (liquid at ambient temperature)

In the next step, a mold (framework) emulating the place to be repaired of asphalt pavement was prepared, and an aggregate 20 (#5 crushed stone, particle size: 20 to 13 mm) was placed into the mold, and spread.

Then, ordinary Portland cement as an alkaline additive was added to the asphalt composition heated to 20°C, then these were mixed, and water as a hardening accelerator was further added to prepare a mixture for pavement. The mixture for pavement was poured into the mold where the aggregate was spread, and the mold was filled with the mixture for pavement. Further, curing was performed at a temperature of 20°C and a humidity of 60% for 7 days, obtaining a test piece. The obtained test piece was subjected to a bending test and an adhesion strength test below. The ratios of the components compounded are as shown in Table 1.

### (Bending test)

The test piece obtained above was subjected to a bending test at a test temperature of -10°C in accordance with the "Paving Investigation/Testing Method Handbook B005" ("Hosou Chosa/Shikenhou Binran" in Japanese) to determine strain at break (bending strain, [× 10⁻³ mm/mm]). In the bending test, higher strain at break (bending strain) is preferred because it indicates excellent flexibility and a lower frequency of cracks. The results of the bending test are shown in Table 1.

### (Tensile adhesion strength test)

Another mold provided with a simulated concrete floor slab was prepared, and the test piece obtained above and the concrete floor slab were bonded with an epoxy adhesive. The bonded product was subjected to a tensile test at test temperatures of 23°C and -10°C in accordance with "Bridge Floor Slab Waterproofing Handbook" ("Dorokyo Shooban Bousui Binran" in Japanese) to determine tensile adhesion strength [N/mm²]. The results are shown in Table 1. A higher tensile adhesion strength indicates better adhesion to the floor slab.

### <Example 2>

An asphalt composition and a mixture for pavement were obtained in the same manner as in Example 1 except that the ratio of the tall oil fatty acid and isostearic acid used was changed to 60:40 (weight ratio), and a test piece was produced and evaluated likewise.

### <Example 3>

An asphalt composition and a mixture for pavement were obtained in the same manner as in Example 1 except that the ratio of the tall oil fatty acid and isostearic acid used was changed to 45:55 (weight ratio), and a test piece was produced and evaluated likewise.

### <Example 4>

An asphalt composition and a mixture for pavement were obtained in the same manner as in Example 1 except that the ratio of the tall oil fatty acid and isostearic acid used was changed to 75:25 (weight ratio) and #6 crushed stone (particle size: 13 to 5 mm) was used as the aggregate, and a test piece was produced and evaluated likewise.

### <Example 5>

An asphalt composition and a mixture for pavement were obtained in the same manner as in Example 2 except that the ratio of the tall oil fatty acid and isostearic acid used was changed to 60:40 (weight ratio), and a test piece was produced and evaluated likewise.

### <Example 6>

An asphalt composition and a mixture for pavement were obtained in the same manner as in Example 1 except that the ratio of the straight asphalt and the modifier used was changed to 90:10 (weight ratio), and a test piece was produced and evaluated likewise.

### <Example 7>

An asphalt composition and a mixture for pavement were obtained in the same manner as in Example 1 except that the ratio of the straight asphalt and the modifier used was changed to 100:0 (weight ratio), and a test piece was produced and evaluated likewise.

### <Comparative Example 1>

An asphalt composition and a mixture for pavement were obtained in the same manner as in Example 7 except that the ratio of the tall oil fatty acid and isostearic acid used was changed to 100:0 (weight ratio), and a test piece was produced and evaluated likewise.

### [Table 1]

**Table 1**

| | | Composition (parts by weight) | | | | | | | | Evaluations | | |
|---|---|---|---|---|---|---|---|---|---|---|---|---|
| | | Asphalt composition | | | | Alkaline additive | Hardening accelerator | Aggregate | | Bending strain at break | Tensile adhesion strength | |
| | | Asphalt | | Lubricative solidification material | | Ordinary Portland cement | Water | Type | Amount used | | | |
| | | Straight asphalt | Modifier | Tall oil fatty acid | Isostearic acid | | | | | [×10^{·3}mm/mm] | [N/mm²] | |
| | | | | | | | | | | | 23°C | -10°C |
| Examples | 1 | 5.8 | 1.5 | 12.7 | 4.3 | 6.8 | 0.2 | #5 crushed stone | 100 | 10.8 | 1.23 | 2 |
| | 2 | 5.8 | 1.5 | 10.2 | 6.8 | 6.8 | 0.2 | #5 crushed stone | 100 | 15.2 | 0.97 | 1.56 |
| | 3 | 5.8 | 1.5 | 7.6 | 9.4 | 6.8 | 0.2 | #5 crushed stone | 100 | 18.8 | 1.21 | 1.25 |
| | 4 | 5.9 | 1.5 | 12.8 | 4.3 | 6.9 | 0.2 | #6 crushed stone | 100 | 17.2 | 0.95 | 1.74 |
| | 5 | 5.9 | 1.5 | 10.2 | 6.9 | 6.9 | 0.2 | #6 crushed stone | 100 | 26.4 | 0.73 | 1.41 |
| | 6 | 6.6 | 0.7 | 12.7 | 4.3 | 6.8 | 0.2 | #5 crushed stone | 100 | 9.2 | - | - |
| | 7 | 7.3 | 0.0 | 12.7 | 4.3 | 6.8 | 0.2 | #5 crushed stone | 100 | 8.2 | - | - |
| Comp. Ex. | 1 | 7.3 | 0.0 | 17.0 | 0.0 | 6.8 | 0.2 | #5 crushed stone | 100 | 8.0 | - | - |

As shown in Table 1, the test pieces obtained by using an asphalt composition comprising an asphalt and a lubricative solidification material, and containing a tall oil fatty acid and/or a tall oil fatty acid ester and a C6-C30 branched saturated fatty acid as the lubricative solidification material had a high bending strain at break, which indicates excellent flexibility and excellent adhesion to a floor slab.

## Claims

1. An asphalt composition for repairing asphalt pavement, the asphalt composition comprising an asphalt and a lubricative solidification material,
wherein the lubricative solidification material contains a tall oil fatty acid and/or a tall oil fatty acid ester, and a C6-C30 branched saturated fatty acid.

2. The asphalt composition according to claim 1, wherein the weight ratio of the content of the tall oil fatty acid and/or the tall oil fatty acid ester to the content of the C6-C30 branched saturated fatty acid, i.e., "tall oil fatty acid and/or tall oil fatty acid ester:C6-C30 branched saturated fatty acid" in the lubricative solidification material is 5:95 to 95:5.

3. The asphalt composition according to claim 1 or 2, wherein the asphalt is a modified asphalt.

4. The asphalt composition according to claim 3, wherein the modified asphalt contains a straight asphalt and a modifier, and the content of the modifier in the modified asphalt is 1 to 40% by weight.

5. The asphalt composition according to claim 1 or 2, further comprising an alkaline additive.

6. The asphalt composition according to claim 1 or 2, wherein the asphalt composition is used such that the asphalt composition is poured into a place to be repaired where an aggregate is spread.
